# EUROPÄISCHE PATENTSCHRIFT

(11) **EP 0 356 606 B1**
(45) Veröffentlichungstag und Bekanntmachung des Hinweises auf die Patenterteilung: **21.04.1993**
(21) Anmeldenummer: 89100679.3
(22) Anmeldetag: 17.01.1989
(51) Int. Cl.: A01C 7/04, A01C 7/06

(54) **Einzelkornsämaschine**
Precision seed drill
Semoir monograine

(30) Priorität: 30.08.1988 DE 3829378
(43) Veröffentlichungstag der Anmeldung: 07.03.1990
(73) Patentinhaber: ACCORD Landmaschinen Heinrich Weiste & Co. GmbH, D-59494 Soest (DE)
(72) Erfinder: Weiste, Helmut, Dipl.-Ing., D-4770 Soest (DE)
(74) Vertreter: Habbel, Hans-Georg, Dipl.-Ing.

(56) Entgegenhaltungen:
- DE-A- 3 306 804
- GB-A- 2 197 573
- Prospekt Accord-Fähse Gmbh, "Monoair 80"

## Beschreibung

Die Erfindung betrifft eine Einzelkornsämaschine gemäß dem Oberbegriff des Hauptanspruches.

Eine derartige Einzelkornsämaschine ist beispielsweise aus dem Prospekt "ACCORD-FÄHSE Monoair 80" bekannt. Bei derartigen Einzelkornsämaschinen wird eine Vielzahl von einzelnen Sägeräten nebeneinander angeordnet, wobei diese Sägeräte von einem gemeinsamen Querträger am Tragrahmen gehalten werden.

Die Laufräder der Sämaschine sind zwischen den einzelnen Sägeräten angeordnet, was auf dem Titelbild, aber insbesondere auch auf dem Bild auf der Rückseite des oben genannten Prospektes deutlich ersichtlich ist. Auf diese Weise ist eine beliebige Einstellung der Reihenabstände für das Saatgut behindert, da die Laufräder zwischen den Sägeräten einen gewissen Mindestabstand der Sägeräte zueinander erfordern.

Weiterhin wird dadurch bewirkt, daß die verwendeten Laufräder möglichst schmal gehalten werden, um die Verstellbarkeit der Sägeräte nicht zu stark einzuschränken. Dies bringt als Nachteil jedoch einen erhöhten Bodendruck mit sich.

Aus der DE-A-33 06 804 ist eine Sämaschine bekanntgeworden, die mit einer Vielzahl von Säscharen arbeitet, denen das auszubringende Saatgut in einstellbaren Mengen aus einem Vorratsbehälter zugeführt wird. Bei dieser bekannten Einrichtung sind die Laufräder, die die Sämaschine tragen, vor einer querverlaufenden Scharhalteschiene angeordnet, wobei diese Laufräder sowohl außerhalb wie auch innerhalb der Schlepperspuren angeordnet werden können, so daß unter Einsatz entsprechender Spurlockerer auch im Bereich der Schlepperspuren ein gutes Saatbett geschaffen werden kann.

Der Erfindung liegt die Aufgabe zugrunde, eine Einzelkornsämaschine zu schaffen, bei der die einzelnen Sägeräte beliebig verstellbar sind.

Diese der Erfindung zugrundeliegende Aufgabe wird durch die Lehre des Hauptanspruches gelöst.

Mit anderen Worten ausgedrückt neben dem Merkmal, daß die Laufräder der eigentlichen Sämaschine in an sich bekannter Weise zwischen dem Schlepper und dem Querträger angeordnet sind und verstellt werden können, wird vorgeschlagen, daß der Querträger im vertikalen Abstand an Längsträgers des Tragrahmens befestigt ist, wobei die Verbindungsmittel zwischen Längsträger und Querträger Freiräume schaffen zur Aufnahme der Befestigungsmittel der Sägeräte, um somit die Sägeräte ungehindert auch bis in den Bereich der Längsträger verstellen zu können.

Durch die Schaffung des größeren Abstandes des Querträgers von dem Schlepper wird der Schwerpunkt der gesamten Einzelkornsämaschine naturgemäß nach hinten verlagert. Daher wird vorteilhafterweise im Gegensatz zu den üblichen Einzelbehältern, die jedem einzelnen Sägerät zugeordnet sind, ein oder mehrere zentrale Saatgutbehälter geschaffen, welche gegenüber den Einzelkornsägeräten weiter vorne angeordnet sind und die durch Zuleitungen, beispielsweise in Form von flexiblen Schläuchen, das Saatgut den einzelnen Sägeräten zuführen.

Weitere vorteilhafte Ausgestaltungen der Einzelkornsämaschine sind aus den Unteransprüchen entnehmbar.

Ein Ausführungsbeispiel einer erfindungsgemäßen Einzelkornsämaschine wird anhand der Zeichnungen beschrieben. Dabei zeigt
- Fig. 1: schematisch eine Seitenansicht einer Einzelkornsämaschine,
- Fig. 2: eine Draufsicht auf einen Teil der Einzelkornsämaschine, wobei zwei einzelne Sägeräte dargestellt sind,
- Fig. 3: eine Seitenansicht eines an der Einzelkornsämaschine angeordneten Vorsatzgerätes, wobei der Querträger der Sämaschine im Querschnitt gemäß der Linie 3 - 3 in Fig. 5 dargestellt ist,
- Fig. 4: eine im Verhältnis zu Fig. 3 rechtwinklig ausgerichtete Ansicht auf den Querträger mit einer Halterung für ein Sägerät sowie einem Längsträger des Tragrahmens und
- Fig. 5: eine Fig. 4 entsprechende Darstellung in einer anderen Stellung der Halteplatte.

In den Zeichnungen ist eine Einzelkornsämaschine dargestellt, die mittels einer handelsüblichen Dreieckskupplung 1 an die Dreipunkthydraulik eines Schleppers ankuppelbar ist. Die Einzelkornsämaschine weist einen Tragrahmen 2 auf mit Längsträgern 3 und einem Querträger 4, wobei der Tragrahmen 2 weiterhin Laufräder 5 aufweist, von denen wenigstens eines als Antriebsrad für Einzelkornsägeräte 6 ausgebildet ist.

Die Einzelkornsämaschine umfaßt eine Vielzahl von Einzelkornsägeräten 6, die mit Hilfe von Parallelogrammlenkern 7 und Halteplatten 8 an dem Querträger 4 befestigt sind.

Die Einzelkornsägeräte 6 umfassen Säräder 9 zur Verteilung der Saatgutkörner sowie Stützräder 10, mit denen sich die Sägeräte 6 gegenüber dem Boden zur Tiefenführung des Einzelkornsägerätes 6 abstützen und Säschare 31 zur Ausformung der Furche.

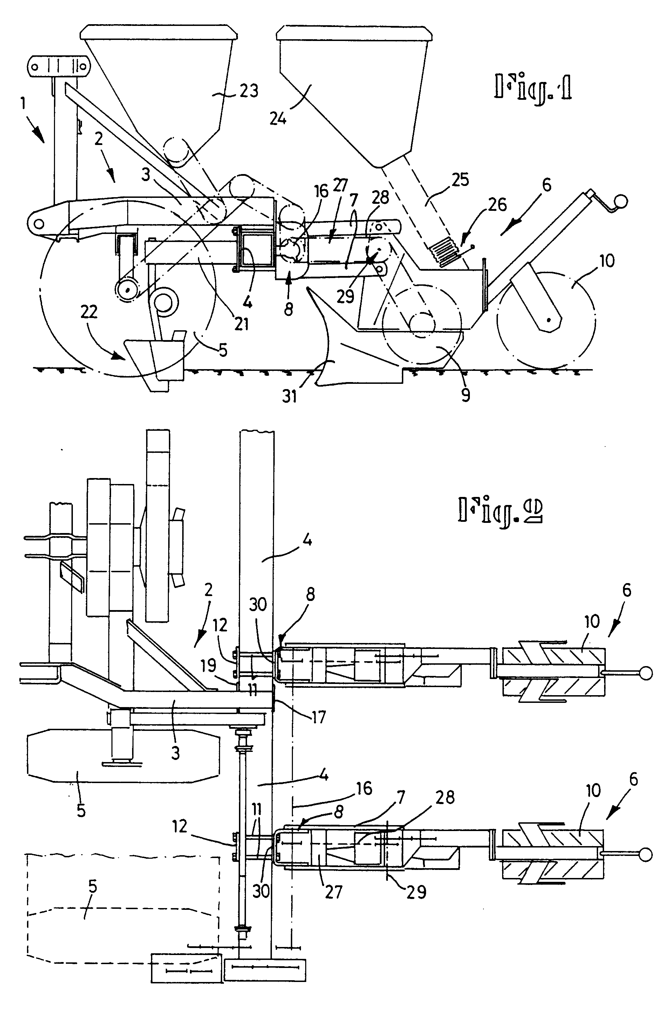

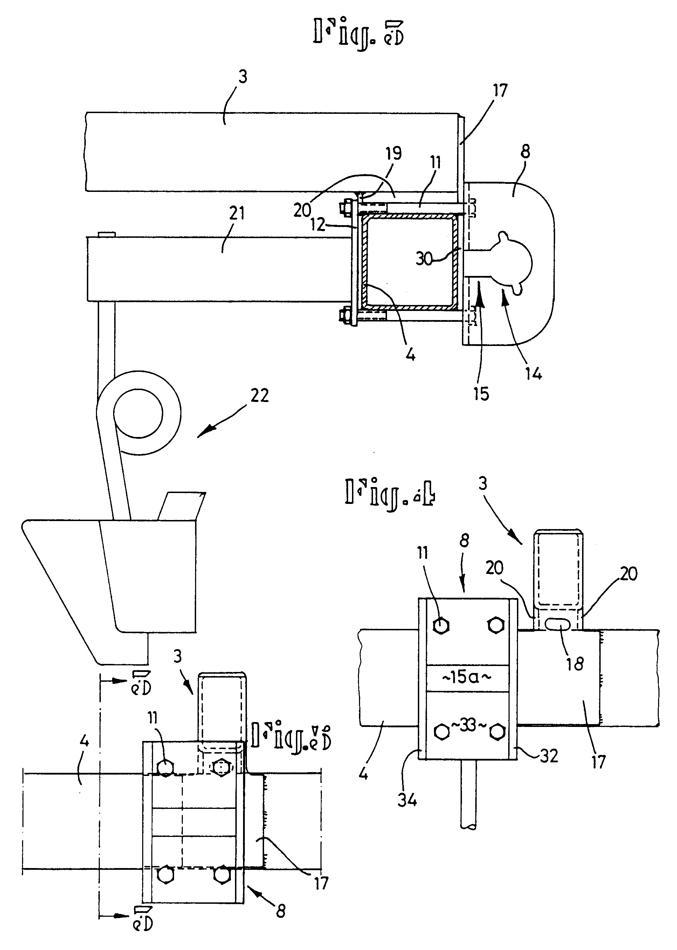

Die Halterung der Sägeräte 6 an dem Querträger 4 ist insbesondere aus Fig. 3 deutlich zu ersehen. Schrauben 11 übergreifen den Querträger 4 und legen die Halteplatte 8, welche das Einzelkornsägerät 6 trägt, mit Hilfe einer Gegenplatte 12 an dem Querträger 4 fest. Jede Halteplatte 8 ist U-förmig ausgebildet und weist in ihren beiden parallelen Seitenwänden 34, 32 eine zentrale Öffnung 14 auf, welche sich zum Querträger 4 in Form einer schlitzartigen Aussparung 15 fortsetzt und in der Stegplatte 33 ebenfalls einen Schlitz 15a bildet. Die zentrale Öffnung 14 dient dabei zur Aufnahme eines Lagers und einer hierin gelagerten Antriebswelle 16, die sich hinter dem Querträger 4 über nahezu dessen gesamte Breite erstreckt. Die Antriebswelle 16 kann an beliebigen Stellen Zahnräder, Keilriemenscheiben oder ähnliche Verbindungselemente zum Antrieb der Einzelkornsägeräte 6 aufnehmen.

Um ein Einzelkornsägerät 6 zu verschieben, werden lediglich die Schrauben 11 gelockert und anschließend kann das Einzelkornsägerät 6 mitsamt der Halteplatte 8, den Schrauben 11 und der Gegenplatte 12 an dem Querträger 4 in seine neue gewünschte Arbeitsstellung verschoben werden. Soll ein Einzelkornsägerät 6 jedoch ganz abgenommen werden, so werden die Schrauben 11 gelöst, die Gegenplatte 12 entfernt und die Antriebskette abgenommen. Anschließend kann das gesamte Einzelkornsägerät 6 mitsamt der Halteplatte 8 von dem Querträger 4 abgenommen werden.

Dabei besteht durch die Aussparung 15 und den Schlitz 15a in der Halteplatte 8 die Möglichkeit, das Einzelkornsägerät 6 mitsamt der Halteplatte 8 über die Antriebswelle 16 zu ziehen, so daß der Montageaufwand auf ein Mindestmaß beim Montieren und Demontieren einzelner Einzelkornsägeräte 6 beschränkt wird.

Die Verstellbarkeit der einzelnen Einzelkornsägeräte an dem Querträger 4 ist stufenlos möglich und aufgrund der Tatsache, daß die Laufräder 5 nicht zwischen den Einzelkornsägeräten 6 angeordnet sind, können die Einzelkornsägeräte 6 in nahezu beliebigen Abständen zueinander angeordnet werden. Lediglich im Bereich der Verbindungen, an denen die Längsträger 3 mit dem Querträger 4 verbunden sind, ist eine stufenlose und beliebige Einstellung nicht möglich.

Um jedoch auch hier eine möglichst große Flexibilität beizubehalten, ist die Verbindung ausgebildet wie in Fig. 4 und 5 dargestellt. Der Längsträger 3 weist eine Stirnplatte 17 auf, die beispielsweise angeschweißt sein kann. Sie verdeckt das stirnseitige Ende des Längsträgers 3 und erstreckt sich von dort zum Querträger 4, wo sie ebenfalls festgelegt, beispielsweise festgeschweißt, ist. Zwischen Längsträger 3 und Querträger 4 wird aufgrund der Abmessungen der Stirnplatte 17 ein Abstand eingehalten, wobei im Bereich dieses Abstandes in der Stirnplatte 17 ein Langloch 18 ausgebildet ist, durch welches ggf. die Schrauben 11 geführt werden können. Im Bereich der Verbindung zwischen Längsträger 3 und Querträger 4 ist nur eine schrittweise Verstellung der Festlegung der Einzelkornsägeräte 6 am Querträger 4 möglich. Aufgrund der Langlöcher 18 kann diese Schrittweite jedoch so klein gehalten werden, daß eine ausreichend beliebige Einstellmöglichkeit für die gebräuchlichen Reihenweiten gegeben ist.

Der Stirnplatte 17 zugeordnet ist eine zweite Verbindungsplatte 19, die ein mit dem Langloch 18 fluchtendes Langloch aufweist und die sich vom Querträger 4, an dem sie angeschweißt ist, bis unter den Längsträger 3 erstreckt. Um die Festigkeit der Verbindung weiter zu erhöhen, sind zwischen der Stirnplatte 17 und der Verbindungsplatte 19 zwei Seitenplatten 20 vorgesehen.

Wie insbesondere aus den Fig. 1 und 3 ersichtlich, kann an der Gegenplatte 12 ein Halter 21 für Vorsatzgeräte vorgesehen sein, wie sie bei 22 angedeutet sind, angeordnet. Halter 21 und Gegenplatte 12 können dabei ein materialeinheitliches Gußteil darstellen oder - wie in der Zeichnung dargestellt - miteinander beispielsweise durch Schweißen fest verbunden sein. Durch diesen fest an der Gegenplatte 12 vorgesehenen Halter 21 wird bewirkt, daß einerseits die Verstellmöglichkeit für die Einzelkornsägeräte 6 vereinfacht wird, da Vorsatzgeräte 22 nicht mehr zwischen den Einzelkornsägeräten 6 angeordnet sein müssen und somit nicht entfernt werden müssen, um die Einzelkornsägeräte 6 auf dem Querträger 4 zu verstellen. Ein weiterer Vorteil ergibt sich dadurch, daß die Vorsatzgeräte 22 immer in einem bestimmten Verhältnis zu den Sägeräten 6 angeordnet sind, so daß sich aufgrund der Ausbildung des Vorsatzgerätes 22 zwangsläufig ergibt, ob dieses genau in der Reihe oder neben der Reihe arbeitet. Diese Ausrichtung kann in Abhängigkeit von den Erfordernissen für das Vorsatzgerät 22 gewählt werden und wird immer beibehalten.

In Fig. 2 sind zwei Laufräder 5 dargestellt, wobei bei die Laufräder 5 auch als Breitreifen bzw. Niederquerschnittsreifen ausgebildet sein können, welche den Bodendruck erheblich verringern. Weiterhin können Zwillingsreifen vorgesehen sein, die ebenfalls eine Verringerung des Bodendruckes bewirken. Schließlich ist bei dem äußeren Laufrad 5 angedeutet, daß anstelle der Laufräder auch eine Walze (teilweise weggebrochen dargestellt) Verwendung finden kann, wobei die Walze aus Gründen der besseren Manövrierbarkeit mehrteilig ausgebildet sein kann. Je nach Gewicht und Ausführung der Walze kann diese entweder eine ganz bewußte Bodenvorbereitung bewirken oder kann zur maximalen Verringerung des Bodendruckes eingesetzt werden.

Die Laufräder 5 können vorteilhaft stufenlos oder schrittweise in verschiedenen Abständen zur Fahrzeugmitte eingestellt werden, so daß beispielsweise die Laufräder 5 genau der Weite der Schlepperspur anpaßbar sind. Durch das Abrollen in der verdichteten Schlepperspur wird ein schlupfarmer Antrieb erreicht.

In Fig. 1 sind zwei Behälter an der Einzelkornsämaschine vorgesehen. Der vordere Behälter ist ein Düngemittelbehälter 23, wobei dessen Zuteilungsorgan von dem zentralen Antrieb der Einzelkornsämaschine angetrieben wird und damit in Abhängigkeit von der Fahrgeschwindigkeit die Düngemittelausbringung regelt. Der hintere Behälter ist ein Saatgutbehälter 24, von dem mehrere flexible Schläuche 25 zu den einzelnen Sägeräten 6 führen.

Im unteren Bereich der Schläuche 25, kurz oberhalb der Sägeräte 6, weist jeder Schlauch 25 ein Absperrorgan 26 auf, welches mechanisch betätigt wird. Das Absperrorgan 26 wird betätigt, wenn das Einzelkornsägerät 6 zu Reparaturzwecken geöffnet werden muß.

Der Düngemittelbehälter 23 weist Zuleitungen zum-Verteilen des Düngermittels auf, ähnlich den flexiblen Schläuchen 25, wobei diese Zuleitungen in ihrem oberen Bereich Absperrorgane ähnlich den Absperrorganen 26 beinhalten oder eine Abschaltkupplung für die Dosierwelle besitzen. Sowohl die Absperrorgane für das Düngemittel als auch Abschaltkupplungen zur Unterbrechung des Antriebes der Säräder 9 sind jeweils pro Reihe vorteilhaft miteinander gekoppelt, so daß eine gemeinsame Betätigung zum Absperren sowohl des Düngemittels als auch des Saatgutes einer Reihe erfolgt. Diese Abschaltung, die beispielsweise mechanisch, elektrisch, elektromagnetisch oder hydraulisch erfolgen kann, kann entweder manuell für jede Reihe in beliebiger Reihenfolge einzeln geschaltet werden, sie kann aber auch durch eine Fahrgassenschaltung ausgelöst werden.

Die beiden Behälter 23 und 24 für Düngemittel bzw. für Saatgut sind möglichst weit vorne auf der Einzelkornsämaschine angeordnet, um den Schwerpunkt dieser Maschine möglichst weit nach vorne zu verlagern. Dadurch wird die Entlastung der Vorderachse des Schleppers gering gehalten. Durch die Verwendung gemeinsamer Saatgutbehälter 24 anstatt von Einzelsaatgutbehältern auf jedem Einzelkornsägerät wird eine möglichst konstante Ablagetiefe des Saatgutes in den Boden erreicht, da die während der Arbeit abnehmenden Füllgewichte der gemeinsamen Saatgutbehälter 24 nicht die Eindringtiefe der Säschare 31 beeinflussen.

Wie in Fig. 1 ersichtlich ist, ist das eigentliche Sägerät 6 an dem Querträger 4 mit Hilfe von Parallelogrammlenkern 7 verbunden. Aus Fig. 1 und Fig. 2 wird ersichtlich, daß jeweils vier einem Sägerät 6 zugeordnete Parallelogrammlenker 7 einen Raum 27 bilden, in dem eine Antriebskette 28 für das Einzelkornsägerät 6 läuft. So wird auch bei den jeweils äußersten Sägeräten 6 eine Verletzungsgefahr durch die Antriebskette 28 verhindert. Die Achsen für die Umlenkräder der Antriebsketten 28, also die Antriebswelle 16 und eine Zwischenwelle 29, verlaufen vorteilhaft auf den Verbindungslinien von jeweils zwei Anlenkpunkten übereinander liegender Parallelogrammlenker 7, so daß bei einer Schwenkbewegung der Parallelogrammlenker 7 eine Längung der Antriebskette 28 minimiert oder verhindert wird.

Eine gleichmäßige Stellung der Halteplatten 8 und ihrer Öffnungen 15 zu der Antriebswelle 16 wird durch Unterlegscheiben 30 erreicht. Diese weisen dieselbe Materialstärke auf wie die Stirnplatten 17. Auf diese Weise halten die Halteplatten 8 immer einen bestimmten Abstand zum Querträger 4 ein, indem sie entweder an den Unterlegscheiben 30 oder an den Stirnplatten 17 anliegen.

Schließlich kann der Querträger 4 teleskopartig aufgebaut sein, so daß seine äußersten Enden nach innen verschoben werden können. Auf diese Weise ist bei Einzelkornsämaschinen, welche eine Vielzahl von Einzelkornsägeräten 6 aufnehmen können und daher eine große Baubreite aufweisen, ein problemloser Transport auf der Straße möglich, ohne Teile des Querträgers 4 nach oben klappen zu müssen.

## Patentansprüche

1. Einzelkornsämaschine mit einer Dreipunktkupplung (1) für die Dreipunkthydraulik eines Schleppers mit mehreren an einem Querträger (4) eines Tragrahmens (2) in beliebigen Reihenabständen angeordneten Einzelkornsägeräten (6) und Saatgutbehälter (24) sowie bei Bedarf aufgebauten Reihendüngerstreuern, dadurch gekennzeichnet,
a) daß die Laufräder (5) der Sämaschine in an sich bekannter Weise zwischen dem Schlepper und dem Querträger (4) angeordnet sind und in Stufen oder stufenlos in Anpassung an verschiedene Schlepperspurbreiten verstellbar ausgebildet sind,
b) daß der Querträger (4) im vertikalen Abstand an Längsträgern (3) des Tragrahmens (2) befestigt ist, wobei die Verbindungsmittel zwischen Längsträger (3) und Querträger (4) Freiräume schaffen zur Aufnahme der Befestigungsmittel der Sägeräte (6) am Querträger (4),
c) daß eine Halteplatte (8) als Haltevorrichtung für die Einzelkornsägeräte vorgesehen ist, die mit einer auf der gegenüberliegenden Seite des Querträgers (4) vorgesehenen Gegenplatte (12) über Schrauben (11) verbunden ist, wobei die oberen Schrauben (11) durch den vertikalen Abstand zwischen dem Querträger (4) und den Länsträgern (3) geführt sind.

2. Einzelkornsämaschine nach Anspruch 1, gekennzeichnet durch Stirnplatten (17), die an der Stirnseite des Längsträgers (3) und an dem Querträger (4) befestigt sind und Verbindungsplatten (19), die sich vom Querträger (4) bis unter den Längsträger (3) erstrecken und dort befestigt sind, wobei die Stirn-(17) und Verbindungsplatten (19 jeweils Langlöcher (18) aufweisen zur Aufnahme von Schrauben (11).

3. Einzelkornsämaschine nach Anspruch 1 oder 2, dadurch gekennzeichnet, daß die Halteplatte (8) U-förmig ausgebildet ist und in den parallelen Seitenwänden (34, 32) je eine Öffnung (14) aufweist, mit welcher sie eine Antriebswelle (16) zum Antrieb der Einzelkornsägeräte (6) umgreift und welcher sich eine schlitzartige Aussparung (15, 15a) anschließt, die bis zum inneren Rand der Seitenwände (34, 32) und durch die Stegplatte (33) der U-förmigen Halteplatte (8) verlauft und breiter ist als es dem Durchmesser der Antriebswelle entspricht.

4. Einzelkornsämaschine nach einem oder mehreren der vorhergehenden Ansprüche, dadurch gekennzeichnet, daß eine Antriebskette (28), welche von einer Antriebswelle (16) zu den Einzelkornsägeräten (6) führt, durch einen Raum (27) zwischen oberen und unteren Parallelogrammlenkern (7) geführt ist, welche jedem Einzelkornsägerät (6) als Halterung zugeordnet sind.

5. Einzelkornsämaschine nach einem oder mehreren der vorhergehenden Ansprüche, dadurch gekennzeichnet, daß die Antriebswelle (16) sowie eine Zwischenwelle (29) um Achsen drehbar sind, die jeweils zwischen zwei übereinanderliegenden Drehpunkten des Parallelogramms und parallel zu dem Querträger (4) verlaufen.

6. Einzelkornsämaschine nach einem oder mehreren der vorhergehenden Ansprüche, dadurch gekennzeichnet, daß der Querträger (4) als Rohr mit quadratischem oder rechteckigem Querschnitt ausgebildet ist.

7. Einzelkornsämaschine nach einem oder mehreren der vorhergehenden Ansprüche, dadurch gekennzeichnet, daß der Querträger (4) mehrteilig ausgebildet ist, wobei die äußeren Teile teleskopartig in dem inneren Teil des Querträgers (4) geführt sind.

8. Einzelkornsämaschine nach einem oder mehreren der vorhergehenden Ansprüche, dadurch gekennzeichnet, daß zusammen mit den Halteplatten (8), mit welchen die Sägeräte (6) an dem Querträger (4) befestigt sind, an der anderen Seite des Querträgers (4) die Gegenplatten (12) zur Befestigung verschiedener Vorsatzgeräte (22) ausgebildet sind.

9. Einzelkornsämaschine nach einem oder mehreren der vorhergehenden Ansprüche, gekennzeichnet durch eine fernbetätigbare Abschaltkupplung für den Antrieb der einzelnen Sägeräte (6).

10. Einzelkornsämaschine nach einem oder mehreren der vorhergehenden Ansprüche, gekennzeichnet durch einen zusätzlich zum Saatgutbehälter (24) vorhandenen Düngemittelbehälter (23) mit mehreren Zuführungen für das Düngemittel, wobei jeweils eine Zuführung einem Sägerät (6) zugeordnet ist und wobei in den Düngemittelzuführungen jeweils eine Abschaltvorrichtung vorgesehen ist, die mit der Abschaltkupplung des zugeordneten Sägerätes (6) zusammengeschaltet ist.

11. Einzelkornsämaschine nach einem oder mehreren der vorhergehenden Ansprüche, dadurch gekennzeichnet, daß die Abschaltvorrichtungen wahlweise manuell in beliebiger Reihenfolge oder von einer Fahrgassenschaltung, und zwar hydraulisch, mechanisch, elektrisch oder elektromagnetisch betätigbar sind.

12. Einzelkornsämaschine nach einem oder mehreren der vorhergehenden Ansprüche, dadurch gekennzeichnet, daß ein für alle Einzelkornsägeräte (6) gemeinsamer Saatgutbehälter (24) im Bereich oberhalb und wenigstens teilweise vor den Einzelkornsägeräten (6) angeordnet ist, wobei mehrere Zuführungen (flexible Schläuche (25)) zum Transport des Saatgutes von dem gemeinsamen Saatgutbehälter (24) zu den einzelnen Sägeräten (6) vorgesehen sind.

13. Einzelkornsämaschine nach einem oder mehreren der vorhergehenden Ansprüche, dadurch gekennzeichnet, daß mindestens eines der Laufräder (5) als Antriebsrad für die Einzelkornsägeräte (6) ausgebildet ist.

14. Einzelkornsämaschine nach Anspruch 1, dadurch gekennzeichnet, daß die Laufräder (5) als Breit- bzw. Niederquerschnittsreifen ausgebildet sind.

15. Einzelkornsämaschine nach Anspruch 1, dadurch gekennzeichnet, daß die Laufräder (5) als Zwillingsreifen ausgebildet sind, wobei die beiden zu einem Zwillingspaar gehörenden Laufräder (5) einen Abstand von wenigstens dem Platzbedarf einer Säreihe aufweisen.

16. Einzelkornsämaschine nach Anspruch 1, dadurch gekennzeichnet, daß anstelle von Laufrädern (5) eine ggf. in mehrere Abschnitte unterteilte Walze Verwendung findet.

## Claims

1. A seed spacing drill comprising a three-point coupling (1) for the three-point hydraulics of a tractor, several seed spacing sowing apparatuses (6) and seed containers arranged with any desired row spacing on a transverse bar (4) of a supporting frame (2) as well as fertilizer drills attached if required, characterized in that
a) the running wheels (5) of the drill are arranged in a manner known per se between the tractor and the transverse bar (4) and are constructed to be adjustable in stages or continuously to conform to different tractor track widths,
b) the transverse bar (4) is fastened vertically spaced to longitudinal beams (3) of the supporting frame (2), the connecting means between longitudinal beam (3) and transverse bar (4) creating free spaces for accommodating the fastening means of the sowing apparatuses (6) on the transverse bar (4),
c) a support plate (8) is provided as support device for the seed spacing sowing apparatuses, which is connected with a counter-plate (12) provided on the opposite side of the transverse bar (4) via screws (11), the upper screws (11) being guided through the vertical space between the transverse bar (4) and the longitudinal beams (3).

2. A seed spacing drill according to claim 1, characterized by end plates (17) which are fastened to the end of the longitudinal beam (3) and to the transverse bar (4) and connecting plates (19) which extend from the transverse bar (4) as far as under the longitudinal beam (3) and are fixed there, the end plates (17) and connecting plates (19) each comprising elongate holes (18) for accommodating screws (11).

3. A seed spacing drill according to claim 1 or claim 2, characterized in that the support plate (8) is of U-shaped construction and comprises an opening (14) in each of the parallel side walls (34, 32), with which opening (14) it encompasses a drive shaft (16) for driving the seed spacing sowing apparatuses (6) and which adjoins a slit-type recess (15, 15a) which runs as far as the inner edge of the side walls (34, 32) and through the grouser plate (33) of the U-shaped support plate (8) and is broader than the diameter of the drive shaft.

4. A seed spacing drill according to any one of the preceding claims, characterized in that a driving chain (28), which leads from a drive shaft (16) to the seed spacing sowing apparatuses (6), is guided through a space (27) between upper and lower parallelogram rods (7) which are associated with each seed spacing sowing apparatus (6) as supports.

5. A seed spacing drill according to any one of the preceding claims, characterized in that the drive shaft (16) and an intermediate shaft (29) can be rotated about axes which each run between two superposed pivots of the parallelogram and parallel to the transverse bar (4).

6. A seed spacing drill according to any one of the preceding claims, characterized in that the transverse bar (4) is constructed as a tube with square or rectangular cross section.

7. A seed spacing drill according to any one of the preceding claims, characterized in that the transverse bar (4) is of multipart construction, the outer parts being guided telescopically in the inner part of the transverse bar (4).

8. A seed spacing drill according to any one of the preceding claims, characterized in that, together with the support plates (8), with which the sowing apparatuses (6) are fastened to the transverse bar (4), on the other side of the transverse bar (4) the counter-plates (12) are constructed to fix a variety of attachments (22).

9. A seed spacing drill according to any one of the preceding claims, characterized by a remote-control disconnect coupling for driving the individual sowing apparatuses (6).

10. A seed spacing drill according to any one of the preceding claims, characterized by a fertilizer container (23) provided in addition to the seed container (24) with several fertilizer supply lines, one supply line being associated with each sowing apparatus (6) and a disconnect device being provided in each fertilizer supply line, which disconnect device is connected together with the disconnect coupling of the associated sowing apparatus (6).

11. A seed spacing drill according to any one of the preceding claims, characterized in that the disconnect devices can be operated manually in any desired sequence or alternatively by a travel lane circuit, hydraulically, mechanically, electrically or electromagnetically.

12. A seed spacing drill according to any one of the preceding claims, characterized in that a seed container (24) common to all the seed spacing sowing apparatuses (6) is arranged in the area above and at least partly in front of the seed spacing sowing devices (6), several supply lines (flexible hoses (25)) being provided for transporting the seed from the common seed containers (24) to the individual sowing apparatuses (6).

13. A seed spacing drill according to any one of the preceding claims, characterized in that at least one of the running wheels (5) is constructed as a drive wheel for the seed spacing sowing devices (6).

14. A seed spacing drill according to claim 1, characterized in that the running wheels (5) are constructed as wide or low section tyres.

15. A seed spacing drill according to claim 1, characterized in that the running wheels (5) are constructed as dual tyres, the two running wheels (5) belonging to a pair being separated by at least the amount of space required by one drill row.

16. A seed spacing drill according to claim 1, characterized in that a roller optionally divided into several sections is used instead of running wheels (5).

## Revendications

1. Semoir monograine comprenant un attelage à trois points (1) se fixant au mécanisme hydraulique à trois points d'un tracteur, comprenant plusieurs éléments à semer monograines (6), et des réservoirs de semence (24) agencés à des écartements de rangs choisis arbitrairement, sur une poutre transversale (4) appartenant à un châssis porteur (2), ainsi que des épandeurs d'engrais en rangs montés en cas de besoin, caractérisé en ce que :
a) les roues (5) du semoir sont disposées, d'une façon connue, entre le tracteur et la poutre transversale (4), et peuvent être réglées par pas successifs ou par variation continue, pour s'adapter à différentes largeurs de voie sur le tracteur ;
b) la poutre transversale (4) est fixée à un certain écartement vertical aux poutres longitudinales (3) du châssis porteur (2), les moyens d'assemblage entre une poutre longitudinale (3) et la poutre transversale (4) créant des espaces libres pouvant recevoir les moyens de fixation des éléments à semer (6) sur la poutre transversale (4),
c) une plaque de montage (8) est prévue en tant que dispositif de montage pour les éléments à semer monograines cet te plaque de montage est réunie par des vis (11) à une contre-plaque (12) prévue sur le côté opposé de la poutre transversale (4), les vis (11) supérieures étant enfilées à travers l'écartement vertical prévu entre la poutre transversale (4) et les poutres longitudinales (3).

2. Semoir monograine selon la revendication 1, caractérisé par des plaques frontales (17) qui sont fixées à la face frontale de la poutre longitudinale (3) et à la poutre transversale (4) et par des plaques d'assemblage (19) qui s'étendent de la poutre transversale (4) jusqu'au-dessous de la poutre longitudinale (3) et sont fixées à cet endroit, la plaque frontale (17) et les plaques d'assemblage (19) présentant des trous allongés (18) destinés à recevoir les vis (11).

3. Semoir monograine selon la revendications 1 ou 2, caractérisé en ce que la plaque de montage (8) est en forme de U et présente dans chacune de ses parois latérales parallèles (34,32) une ouverture (14) avec laquelle elle entoure un arbre d'entraînement (16) servant à entraîner les éléments à semer monograines (6), et à laquelle se raccorde un évidement (15,15a) en forme de fente qui s'étend jusqu'aux bords intérieurs des parois latérales (34,32) et à travers la plaque d'âme (33) de la plaque de montage (8) en forme de U, et est plus large que le diamètre de l'arbre d'entraînement.

4. Semoir monograine selon une ou plusieurs des revendications précédentes, caractérisé en ce qu'une chaîne d'entraînement (28), qui mène d'un arbre d'entraînement (16) aux éléments à semer monograines (6), passe dans un espace (27) compris entre les biellettes (7) supérieure et inférieure montées en parallélogramme qui sont associées à chaque élément monograine (6) pour servir de monture.

5. Semoir monograine selon une ou plusieurs des revendications précédentes caractérisé en ce que l'arbre d'entraînement (16) ainsi qu'un arbre intermédiaire (29) peuvent tourner autour d'axes qui s'étendent chacun entre deux points d'articulation superposés du parallélogramme, et parallèlement à la poutre transversale (4).

6. Semoir monograine selon une ou plusieurs des revendications précédentes, caractérisé en ce que la poutre transversale (4) est constituée par un tube de section carrée ou rectangulaire.

7. Semoir monograine selon une ou plusieurs des revendications précédentes, caractérisé en ce que la poutre transversale (4) est réalisée en plusieurs parties, les parties extérieures étant guidées télescopiquement dans la partie intérieure de la poutre transversale (4).

8. Semoir monograine selon une ou plusieurs des revendications précédentes, caractérisé en ce que, conjointement avec les plaques de montage (8), par lesquelles les éléments (6) sont fixés à la poutre transversale (4), les contre-plaques (12) servant à la fixation de différents appareils (22) montés en amont sont constituées sur l'autre côté de la poutre transversale (4).

9. Semoir monograine selon une ou plusieurs des revendications précédentes, caractérisé par un accouplement débrayable commandé à distance pour l'entraînement des éléments (6) individuels.

10. Semoir monograine selon une ou plusieurs des revendications précédentes caractérisé par un réservoir d'engrais (23) prévu en supplément du réservoir de semence (24), et équipé de plusieurs conduites d'amenée pour le transport de l'engrais, une conduite d'amenée étant associée à chacun des éléments (6), et, dans chacune des conduites d'arrêt, est prévu un dispositif d'arrêt qui est commandé conjointement avec l'accouplement débrayable de l'élément (6) respectif.

11. Semoir monograine selon une ou plusieurs des revendications précédentes caractérisé en ce que les dispositifs d'arrêt peuvent être actionnés, sélectivement, à la main, dans un ordre de succession quelconque, ou par une commande de manoeuvre, par voie hydraulique, mécanique, électrique ou électromagnétique.

12. Semoir monograine selon une ou plusieurs des revendications précédentes, caractérisé en ce qu'un réservoir à semence commun (24) à tous les éléments monograines (6) est agencé dans la région située au-dessus et au moins partiellement en avant des éléments monograines (6), cependant qu'il est prévu plusieurs conduites d'amenée (tuyaux flexibles (25)) pour transporter la semence du réservoir de semence commun (24) aux divers éléments (6).

13. Semoir monograine selon une ou plusieurs des revendications précédentes, caractérisé en ce qu'au moins une des roues (5) constitue une roue d'entraînement pour les éléments (6) individuels.

14. Semoir monograine selon la revendication 1, caractérisé en ce que les roues (5) sont constituées par des pneumatiques larges ou à section surbaissée.

15. Semoir monograine selon la revendication 1, caractérisé en ce que les roues (5) sont constituées par des pneumatiques jumelés, les deux roues (5) appartenant à une paire de pneumatiques jumelés présentant un écartement au moins égal à la place nécessaire pour un rand de graines.

16. Semoir monograine selon la revendication 1, caractérisé en ce qu'en remplacement de roues (5), on utilise un rouleau éventuellement divisé en plusieurs segments.
